# FASCICULE DE BREVET EUROPEEN

(11) **EP 0 428 432 B1**
(45) Date de publication et mention de la délivrance du brevet: **04.05.1994**
(21) Numéro de dépôt: 90403113.5
(22) Date de dépôt: 05.11.1990
(51) Int. Cl.: B60R 25/10, G08B 31/00

(54) **Antivol à ultrasons auto-adaptatif**
Selbstanpassender Ultraschall-Diebstahlschutz
Self-adjusting ultrasonic anti-theft device

(30) Priorité: 14.11.1989 FR 8914940
(43) Date de publication de la demande: 22.05.1991
(73) Titulaire: VALEO NEIMAN, 78290 Croissy-sur-Seine (FR)
(72) Inventeur: Hurst, Gilbert, F-60110 Meru (FR)
(74) Mandataire: Gamonal, Didier

(56) Documents cités:
- GB-A- 2 050 022
- GB-A- 2 085 626
- US-A- 4 639 902

## Description

La présente invention concerne d'une manière générale un système antivol pour véhicule automobile détectant une présence étrangère à l'intérieur du véhicule par l'utilisation d'ultrasons.

Ces dispositifs peuvent fonctionner de deux manières différentes:
- ou bien l'on excite un transducteur-émetteur en mode continu ou sensiblement continu, de façon à créer à l'intérieur du véhicule des ondes ultrasonores qui présentent une configuration de champ acoustique sensiblement stationnaire, en l'absence de mouvement dans le véhicule et l'on détecte toute modification survenant à ce champ;
- ou bien l'on excite le transducteur-émetteur par de brèves impulsions, et, à la manière d'un sonar actif, on cherche à déterminer des échos mobiles par rapport au fond d'échos fixes normalement associés au véhicule.

Cette seconde solution nécessite, pour être performante, un traitement complexe des informations. Celui-ci peut difficilement être implanté dans les véhicules à un coût acceptable.

La première solution, plus simple, ne donne pas totale satisfaction actuellement.

La présente invention à notamment pour but de perfectionner de tels dispositifs, pour améliorer la situation.

Le dispositif proposé est du type comportant:
- un transducteur-émetteur d'ultrasons;
- un circuit d'excitation sensiblement continue du transducteur-émetteur, pour produire des ondes ultrasonores à l'intérieur du véhicule, ces ondes définissant une configuration de champ acoustique sensiblement stationnaire en l'absence de mouvement dans le véhicule;
- un transducteur-récepteur d'ultrasons;
- un circuit de réception relié au transducteur-récepteur pour fournir un signal capté, représentatif du champ acoustique perçu par le transducteur-récepteur;
- un étage amplificateur du signal capté, à gain variable par une résistance en parallèle sur la maille de courant d'un transistor auxiliaire, suivi d'un étage redresseur;
- une boucle d'asservissement du gain de l'étage amplificateur en fonction de la sortie de l'étage redresseur;
- des moyens de traitement pour établir une alarme en fonction des variations du signal capté, relié à la sortie de l'étage redresseur, et comprenant un détecteur de variations, déclenchant un montage générateur d'impulsions calibrées, le déclenchement de l'alarme se faisant lorsqu'un comptage de ces impulsions atteint un nombre prédéterminé.

Un tel dispositif est décrit dans le document GB-A-2 085 626

Dans ce qui précède, les mots "excitation sensiblement continue" visent une excitation continue ou par impulsions suffisamment longues pour que l'on puisse établir un champ acoustique sensiblement stationnaire à l'intérieur du véhicule, à l'échelle des temps correspondant à des mouvements humains.

Suivant l'invention, un tel dispositif est caractérisé en ce que la boucle d'asservissement comporte un amplificateur différentiel, dont une entrée reçoit la sortie de l'étage redresseur, l'autre une tension de référence, tandis que sa sortie commande la conduction du transistor auxiliaire.

Jusqu'à présent, l'alarme était établie par des circuits analogiques, comparant le signal capté à un seuil, dont le réglage était extrêmement délicat. En utilisant les moyens qui viennent d'être décrits, on tient compte d'un champ moyen, et l'on peut utiliser ensuite un comptage d'impulsions, pour déclencher l'alarme, au niveau de circuits numériques, ou mieux d'un microprocesseur.

L'invention prend toute sa mesure lorsque l'étage amplificateur est prévu avec un grand gain et une constante de temps élevée choisis de telle sorte que la boucle d'asservissement qu'il forme est de caractéristique hypercritique.

Selon un autre aspect de l'invention, qui peut être d'application plus générale, à partir d'un tel signal représentant le niveau du champ acoustique perçu en un point du véhicule, transformé en impulsions calibrées, on réalise un comptage de ces impulsions à partir de la première d'entre elles, pendant un temps prédéterminé.

De préférence, ce comptage d'impulsions s'effectue pendant deux créneaux temporels espacés d'un intervalle. Les durées de ces créneaux et de cet intervalle sont choisies en fonction des caractéristiques du véhicule, compte tenu de la réponse hypercritique de la boucle d'asservissement (ou plus généralement du système produisant le signal capté).

D'autre caractéristiques et avantages de l'invention apparaîtront à l'examen de la description détaillée ci-après et des dessins annexés, sur lesquels:
- la figure 1 est le schéma de principe d'un dispositif antivol à ultrasons pour véhicule;
- la figure 2 est le schéma détaillé de la partie émission du dispositif;
- la figure 3 est le schéma détaillé de la partie réception du dispositif avec son alimentation;
- la figure 4 est le schéma détaillé de la partie amplification et traitement du dispositif selon l'invention;
- les figures 5 à 7 montrent des diagrammes temporels illustrant le fonctionnement du dispositif selon l'invention; et
- la figure 8 montre d'autres diagrammes temporels illustrant le fonctionnement du dispositif selon l'invention.

Les dessins annexés présentent, pour l'essentiel, des informations de caractère certain. Ils sont donc à considérer comme incorporés à la description, et pourront servir en tant que de besoin à la définition de l'invention.

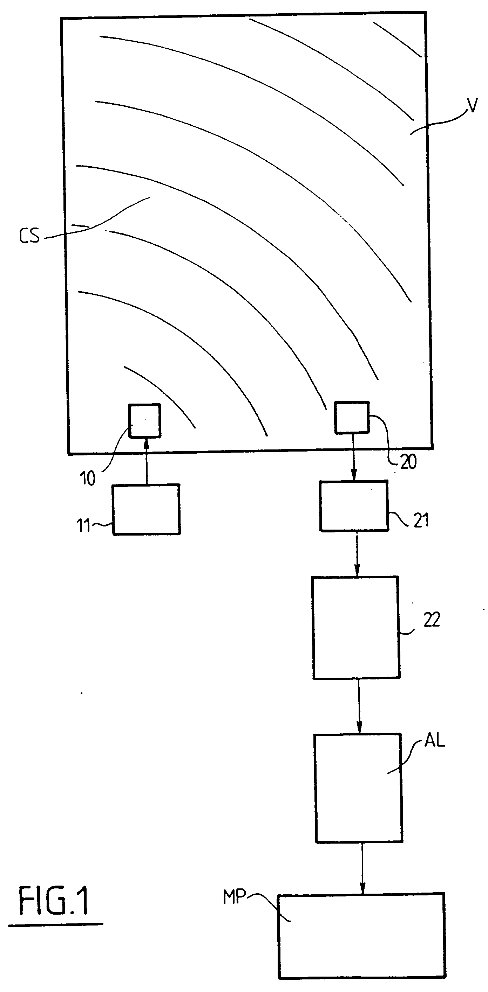

Sur la figure 1, on a représenté schématiquement en V l'espace interne d'un véhicule.

Celui-ci comporte un transducteur à ultrasons émetteur 10, associé à son circuit d'excitation 11, ainsi qu'un transducteur récepteur d'ultrasons 20, associé à son circuit de réception 21.

Comme déjà indiqué, le transducteur-émetteur est excité en mode continu, ou par impulsions longues, de façon à créer à l'intérieur du véhicule un champ stationnaire CS, que l'on a illustré schématiquement par la position des ventres d'amplitude des ondes utrasonores à l'intérieur de l'habitacle, sur la figure 1.

Le capteur 20 va percevoir un signal ultrasonore dont l'amplitude dépend de celle du champ ultrasonore à son niveau.

Le signal capté disponible à la sortie du circuit 21 est appliqué à un circuit amplificateur 22, suivi d'un circuit AL chargé d'élaborer l'information "alarme", à partir du signal capté et amplifié. Jusqu'à présent, cette information "alarme" est établie sous forme analogique, et transmise ensuite à un organe de traitement, qui peut être un microprocesseur MP installé à bord du véhicule.

Actuellement, ces dispositifs sont difficiles à régler.

En effet, l'allure du champ stationnaire dépend non seulement de la géométrie interne de l'habitacle du véhicule, mais aussi de son équipement intérieur (cuir ou drap pour les sièges, en particulier). De plus, le champ stationnaire peut être altéré en raison de variations de la température ambiante (ensoleillement), ou pour d'autres causes qui n'ont rien à voir avec une intrusion, comme un choc sur la carrosserie.

Ceci a souvent conduit à utiliser plusieurs capteurs récepteurs, d'où des difficultés pour maintenir la faible consommation requise à bord du véhicule, typiquement 1 milli-ampère sous 12 volts.

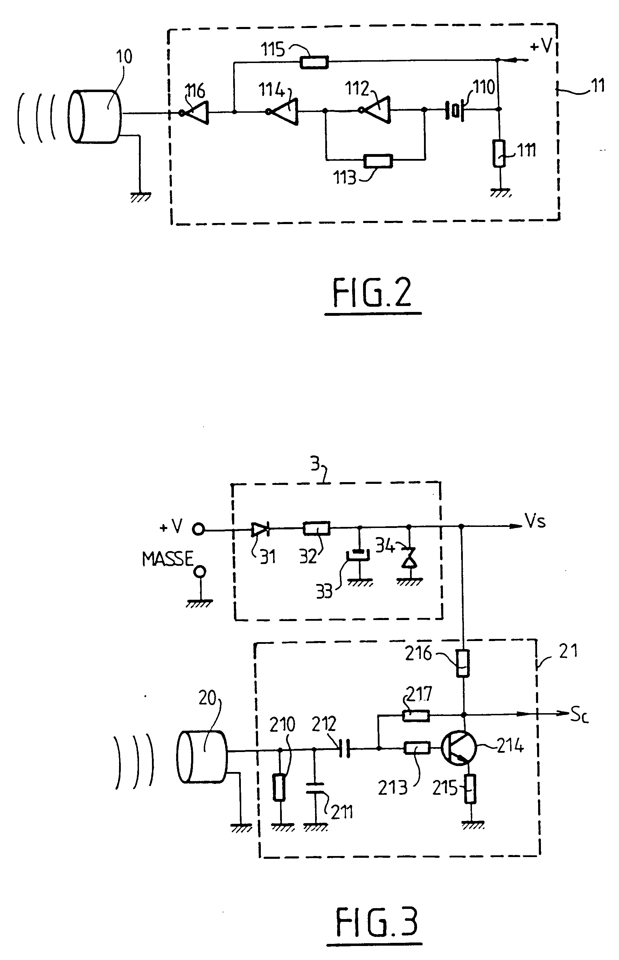

Sur la figure 2, on retrouve le transducteur-émetteur 10. Son circuit d'excitation 11, alimenté à partir de la tension de batterie +V, est articulé sur un quartz 110, suivi d'une cascade de trois amplificateurs-inverseurs 112, 114 et 116. L'amplificateur 112 est muni d'une résistance de contre-réaction 113. Entre la sortie de l'amplificateur 114 et l'entrée de l'amplificateur 116 est placée une résistance 115 reliée à une résistance 111 allant vers la masse, ce qui procure le caractère oscillatoire du montage. La tension d'oscillation est appliquée par l'inverseur 116 au transducteur 10.

Sur la figure 3, la tension de batterie +V est appliquée à un montage d'alimentation 3 constitué d'une diode 31 suivie d'une résistance 32, puis d'un condensateur 33 allant vers la masse, avec en parallèle sur celui-ci une diode Zener 34, pour fournir aux circuits électroniques une tension Vs suffisamment stable et protégée contre les surtensions.

Le transducteur-récepteur 20 est relié à un circuit de réception 21 comportant en entrée le montage parallèle d'une résistance 210 et d'une capacité 211. Ensuite intervient une capacité de liaison 212, suivie d'une résistance 213 allant vers la base d'un transistor 214. Celui-ci est muni d'une résistance d'émetteur 215, d'une résistance de collecteur 216 à travers laquelle lui parvient la tension Vs, et d'une résistance de polarisation 217, revenant entre le condensateur 212 et la résistance 213.

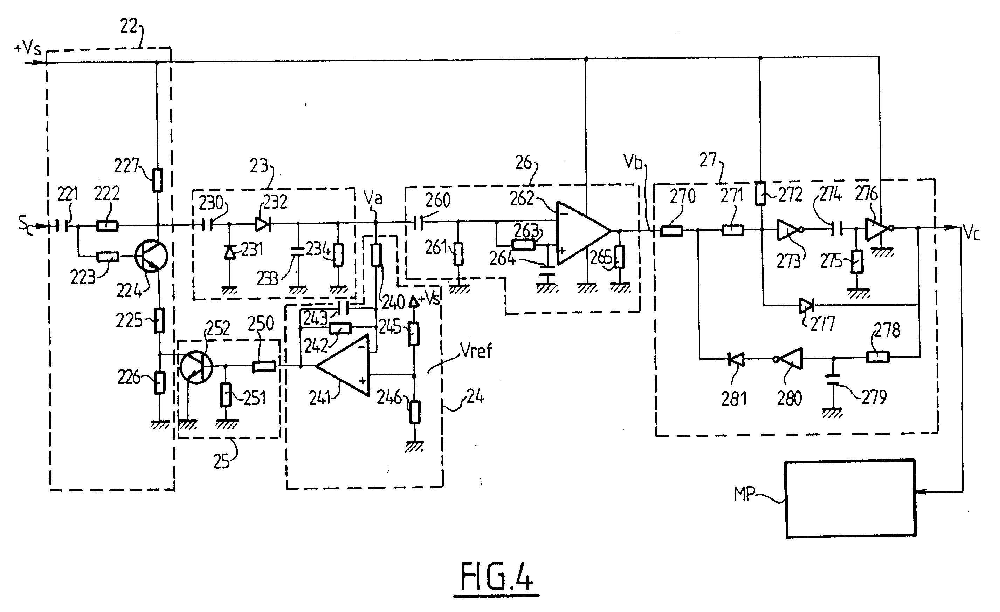

La plupart des éléments essentiels de l'invention se trouvent sur la figure 4.

Celle-ci commence par un étage amplificateur 22, qui reçoit le signal capté Sc disponible en sortie du circuit 21 de la figure 3.

Un condensateur 221 applique ce signal d'une part à la base, d'autre part au collecteur d'un transistor 224, respectivement à travers des résistances 223 et 222. Ce même transistor reçoit la tension +Vs à travers une résistance de collecteur 227, tandis qu'il est muni de deux résistances d'émetteur 225 et 226.

Prévue sur son collecteur, la sortie de cet étage est appliquée à un étage redresseur 23 comportant une capacité de liaison 230, suivie d'une diode 231 montée en inverse vers la masse et d'une diode 232 montée en direct vers un condensateur 233 allant vers la masse, et en parallèle sur une résistance 234. On note Va la tension de sortie de cet étage redresseur 23.

Cette tension Va est appliquée à un étage amplificateur de boucle 24, commençant par une résistance 240 allant vers l'entrée inverseuse d'un amplificateur 241. Cette même entrée inverseuse est reliée à la sortie de l'amplificateur par une résistance 242 en parallèle sur une capacité 243, l'ensemble fournissant une constante de temps élevée pour cet amplificateur, en même temps qu'un fort gain. L'entrée non inverseuse de l'amplificateur reçoit une tension de référence Vref, définie par division de la tension +Vs à l'aide de deux résistances 245 et 246. On observera que le montage de l'invention permet de s'affranchir de tout réglage de la tension de référence, celle-ci étant définie par un choix à la construction des valeurs de résistance 245 et 246.

La sortie de l'étage 24 est appliquée à un étage auxiliaire 25 constitué d'un transistor 252 dont la maille collecteur-émetteur est en parallèle sur la résistance 226, tandis que sa base reçoit la sortie de l'amplificateur 241 à travers une résistance 250, tout en étant reliée à la masse par une résistance 251. Plus la tension appliquée à l'entrée de l'étage 25 est élevée, plus l'espace collecteur-émetteur du transistor 252 devient conducteur, ce qui a pour effet de shunter de plus en plus la résistance 226 et partant de diminuer l'impédance du circuit émetteur du transistor 224. Cette diminution de l'impédance d'émetteur augmente le gain de l'étage amplificateur 22.

On peut d'ores et déjà observer que le signal Sc est un signal représentant la pression sonore instantanée captée au niveau du transducteur-récepteur. Le signal Va représente la valeur instantanée du niveau sonore perçu par le transducteur-récepteur. Cette valeur est ramenée sur la boucle d'asservissement pour faire varier le gain de l'étage amplificateur 22, en modifiant l'impédance d'émetteur de celui-ci à l'aide de la maille collecteur-émetteur du transistor auxiliaire 252.

Et la boucle d'asservissement est rendue hypercritique, par le fait qu'elle possède un fort gain, en même temps qu'une forte constante de temps.

Habituellement, les spécialistes évitent de rendre des boucles d'asservissement hypercritiques. Il a été observé ici qu'une boucle d'asservissement de caractéristique légèrement hypercritique permettait d'amplifier de manière considérable des variations rapides du niveau du champ ultra-sonore, même de faible amplitude, en créant en sortie de boucle, en Va une perturbation pseudo-périodique amortie résultant du caractère hypercritique de l'amortissement de la boucle. Par contre, des variations lentes du champ ultra-sonore, même de forte amplitude, sont lissées par l'effet d'asservissement. Ces propriétés ont été mises à profit pour rendre le fonctionnement du dispositif, basé sur la détection de variations rapides du champ acoustique moyen régnant dans l'habitacle du véhicule, indépendant de la valeur moyenne de ce champ, donc dans une large mesure de la géométrie de l'habitacle, de la nature du revêtement intérieur, de la présence d'objets inertes sur les sièges du véhicule, sans compter les effets de la température, tous ces paramètres gênant habituellement le bon fonctionnement des détecteurs à ultra-sons connus jusque là.

Mieux encore, comme on le verra plus loin, ces propriétés concourrent à permettre de distinguer la réponse du dispositif à un seul ébranlement, même important, (ne correspondant pas, en principe, à une intrusion) et celle à une suite de petits ébranlements qui sera le plus souvent à considérer comme une intrusion.

La tension Va est appliquée à un étage détecteur de variations, 26. Cet étage 26 commence par une capacité de liaison 260, suivie d'une résistance 261 allant vers la masse. Le signal obtenu est appliqué directement à l'entrée inverseuse d'un amplificateur différentiel 262, tandis qu'il est appliqué indirectement à l'entrée non inverseuse de celui-ci, à travers une résistance série 263 et une capacité 264 en dérivation vers la masse formant ensemble un circuit retardateur. De la sorte l'amplificateur 262 fonctionne comme un comparateur en boucle ouverte, et est muni à sa sortie d'une résistance 265 vers la masse. Ce montage, parfois désigné par l'appellation anglaise "D.C. RETRIEVER", compare le signal d'entrée sur son entrée inverseuse à une réplique retardée et très légèrement affaiblie de celui-ci sur son entrée non inverseuse. En conséquence, lorsque le signal d'entrée Va est constant, par le jeu des courants de polarisation des entrées de l'amplificateur, la tension sur l'entrée non inverseuse est très légèrement supérieure à la tension sur l'entrée inverseuse: l'amplificateur étant en boucle ouverte, sa tension de sortie s'établit donc au voisinage de la tension d'alimentation. Lorsque le signal d'entrée Va augmente, l'entrée inverseuse voit le signal instantané tandis que l'entrée non inverseuse de l'amplificateur voit le signal Va retardé, donc puisque Va augmente, inférieur à la valeur vue par l'entrée inverseuse. La tension de sortie s'établira donc au voisinage de zéro. Par contre lorsque la tension Va diminue, le signal retardé présent sur l'entrée non inverseuse est plus grand que le signal instantané présent sur l'entrée inverseuse: la tension de sortie de l'amplificateur s'établit donc au voisinage de la tension d'alimentation.

Le signal Vb ainsi obtenu déclenche un générateur d'impulsions 27. Ce générateur est constitué ici de deux résistances consécutives 270 et 271 reliées à l'entrée d'un amplificateur-inverseur 273, en même temps qu'à la tension +Vs par une résistance 272. La sortie de l'amplificateur 273 est appliquée par une capacité 274 suivie d'une résistance 275 vers la masse à l'entrée d'un second amplificateur-inverseur 276, dont la sortie va, d'une part à travers une diode 277 montée en inverse retrouver l'entrée de l'amplificateur 273, d'autre part exciter à travers une résistance 278 suivie d'une capacité 279 vers la masse un autre amplificateur-inverseur 280 suivi d'une diode 281 montée dans le sens direct, dont la sortie vient se relier entre les résistances 270 et 271.

Le dispositif fonctionne de la manière suivante: au repos, (champ Va constant), la tension Vb s'établit au voisinage de la tension d'alimentation et elle tombe à zéro dès que le signal Va augmente. Ce passage à zéro est répercuté via les résistances 270 et 271 sur l'amplificateur-inverseur 273 dont la sortie prend le niveau logique "1". Ce niveau est répercuté par le condensateur 274 à l'entrée de l'amplificateur 276 dont la sortie Vc bascule du niveau logique "1" au niveau logique "zéro". Ce niveau "zéro" est répercuté par la diode 277 à l'entrée de l'amplificateur 273, fixant cette entrée à zéro indépendamment de la remontée éventuelle du signal Vb. Cet état de chose dure le temps nécessaire au condensateur 274 pour se charger a travers la résistance 275: le potentiel à l'entrée de l'amplificateur 276 redescend donc graduellement et lorsqu'il atteint le seuil bas de cet amplificateur celui-ci rebascule et la sortie Vc retourne au niveau "un" libérant ainsi l'entrée de l'amplificateur 273 pour un nouveau déclenchement. Est donc ainsi créée en Vc une impulsion négative dont la durée ne dépend que de la constante de temps formée par la résistance 275 et la capacité 274 en liaison avec le seuil logique de l'amplificateur 276, et non plus de la largeur de l'impulsion présente en Va.

Cette impulsion est retardée par le circuit formé par la résistance 278 et la capacité 279 puis mise en forme et inversée par l'amplificateur 280. A la sortie de l'amplificateur 280, on dispose d'une impulsion positive de même largeur que l'impulsion négative produite sur Vc. Cette impulsion positive est réinjectée par la diode 281 au point commun des résistances 270 et 271. Son effet est de bloquer pendant toute sa durée toute transmission d'un signal de déclenchement négatif provenant de Vb en direction de l'entrée de l'amplificateur 273. De la sorte aucun déclenchement nouveau du processus ne peut intervenir avant la fin de l'impulsion retardée issue de l'amplificateur 280.

Les impulsions négatives produites en Vc seront donc espacées dans le temps d'une durée minimale, cette durée dépendant essentiellement de la constante de temps formée par la résistance 278 et le condensateur 279. Les impulsions produites en Vc ayant une durée fixe et un espace minimum entre elles sont dites "calibrées". Elles sont très facilement prises en compte par un microprocesseur.

Il s'agit donc d'un générateur d'impulsions calibré, déclenché en fonction du niveau logique présent à son entrée Vb.

Les impulsions calibrées ainsi obtenues sont appliquées à un microprocesseur MP, qui peut être le microprocesseur de bord incorporé au véhicule pour d'autres fonctions.

Le dispositif formé par l'étage détecteur de variations 26 et le générateur d'impulsions 27 permet d'obtenir en sortie des trains d'impulsions négatives calibrées. Si on le désire il est possible d'obtenir des impulsions positives d'une manière tout à fait analogue en échangeant le rôle joué par les entrées inverseuse et non-inverseuse de l'amplificateur 262, en changeant le sens des diodes 281 en 277 en connectant le pied de la résistance 275 au "un" logique (+ tension d'alimentation) au lieu du "zéro" (masse), et le pied de la résistance 272 au "zéro" (masse) au lieu du "un" (+ tension d'alimentation).

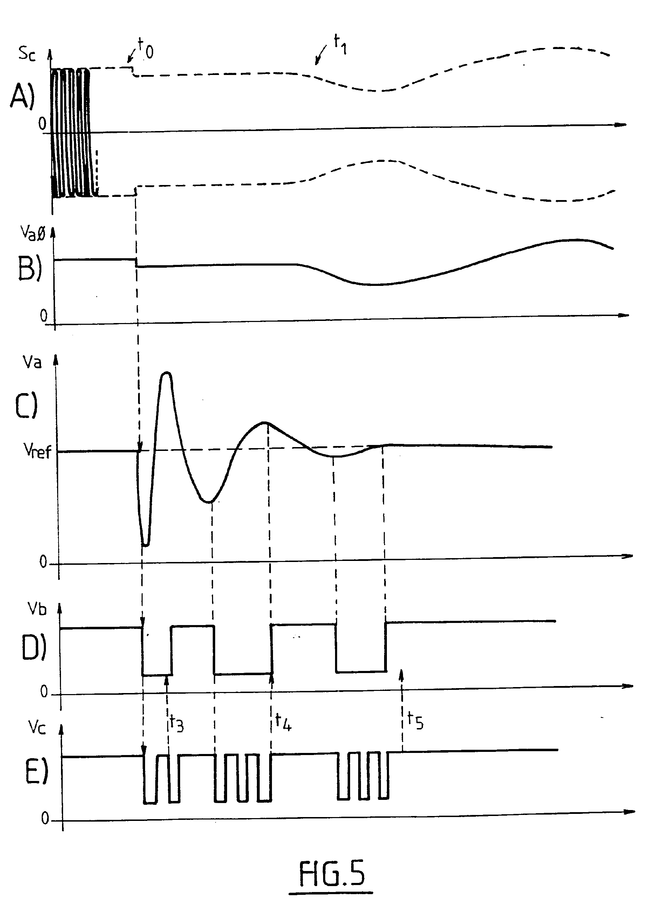

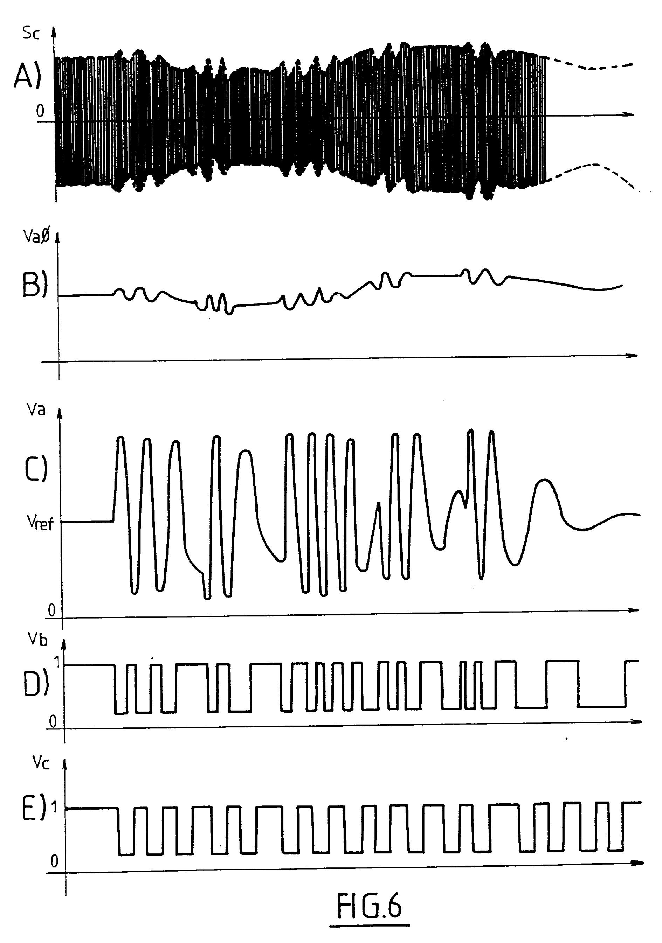

Il est maintenant fait référence aux figures 5 et 6.

Le signal capté Sc présente l'allure de la figure 5A. A l'instant tO survient une variation faible mais brusque de l'amplitude moyenne du signal. Une telle variation est produite par une modification "accidentelle" du champ d'ultrasons stationnaire créé dans le véhicule, modification causée par une perturbation à caractère rapide (quelques dixièmes de seconde) des conditions de propagation sonores dans l'habitacle (par exemple une intrusion). En fait, on considère ici une seule variation dans le but de simplifier les explications, en général une intrusion dans l'habitacle se traduit par une succession plus ou moins rapide de telles variations.

A l'instant tl, est représentée une variation lente du niveau ultrasonore résultant d'une modification lente des conditions de propagation sonores, telles que par exemple une variation de la température de l'habitacle.

La figure 5B illustre la tension Va_{O} telle qu'elle serait disponible à la sortie de l'étage redresseur 23 en boucle ouverte, c'est-à-dire si le collecteur du transistor auxiliaire 252 était déconnecté de la résistance 226. Ce que l'on obtient alors est le niveau du signal acoustique Sc.

La figure 5C illustre l'allure réelle du signal Va avec le montage selon, l'invention. En réponse à la variation du champ, on obtient une tension Va qui part de la tension de référence Vref, pour prendre une allure de réponse hypercritique, telle que connue de l'homme de l'art, c'est-à-dire qu'il existe plusieurs suroscillations consécutivement à la variation de champ qui s'est produite à l'instant t_{O}.

Par contre, les variations lentes produites à partir de tl sont "compensées" par l'asservissement de niveau et n'apparaissent pas sur la tension Va.

La figure 5D illustre l'allure de la tension Vb disponible en sortie du montage 26.

Avec un léger retard, non représenté sur la figure et introduit par la constante de temps formée par la résistance 263 et la capacité 264, la tension Vb, normalement haute au repos, s'établit aux environs de zéro pendant tout le temps où la tension Va est strictement croissante, comme indiqué plus haut. On observe donc en Vb des impulsions négatives correspondant aux périodes pendant lesquelles Va est strictement croissante.

La figure 5E illustre la tension Vc, où l'on voit qu'à l'intérieur des impulsions négatives du signal Vb, on va produire des impulsions calibrées.

Ces impulsions calibrées commencent avec la première transition du signal Vb. Il a été indiqué plus haut que chaque impulsion "calibrée" se composait d'une impulsion de durée fixe suivie d'une période de repos au cours de laquelle aucune nouvelle impulsion ne pouvait se produire. Si à la fin de cette période de repos le signal d'entrée du montage (Vb) est toujours négatif, une nouvelle impulsion est générée, suivie d'une nouvelle période de repos et ainsi de suite. Ainsi en t3 sur la figure 5E à la fin du temps de repos suivant la première impulsion, on voit que le signal Vb est toujours bas: une nouvelle impulsion est donc générée. Par contre en t4 et t5, à la fin des périodes de repos suivant la dernière impulsion émise, le signal Vb est remonté et il n'y a pas d'autres impulsions.

On voit ainsi qu'une perturbation rapide génère des impulsions alors que les perturbations lentes comme celles représentées à partir de tl (figure 5A) n'en génèrent pas.

En revenant maintenant sur l'hypothèse simplificatrice faite ci-dessus en ne considérant qu'une seule impulsion, on verra maintenant ce qui se passe lors d'une réelle intrusion dans l'habitacle: le spécialiste sait qu'une telle intrusion se traduit par une succession de variations brusques du champ ultrasonore. La figure 6 représente une perturbation du champ due à une intrusion. L'ordre des dessins est le même que pour la figure 5: en 6A est représentée l'allure du signal ultrasonore capté Sc; de petites variations brusques, caractéristiques d'une intrusion sont superposées à des variations plus lentes, d'amplitude éventuellement plus importante mais moins significatives. En 6B est représentée l'allure qu'aurait le signal Vaφ en l'absence de la boucle d'asservissement, en 6C l'allure réelle de la tension observée en Va et enfin en et 6E l'allure des signaux en Vb et Vc respectivement.

La succession des petites perturbations ne laissant pas à la boucle d'asservissement le loisir de se stabiliser, il va en résulter en Vb une série d'impulsions plus brèves et plus rapprochées que celles crées par une perturbation unique (cf. figure 5). Ceci se traduira en sortie (Vc) du générateur d'impulsions calibrées 27 par un train quasi continu d'impulsions, train qui va durer tout le temps que durera l'intrusion.

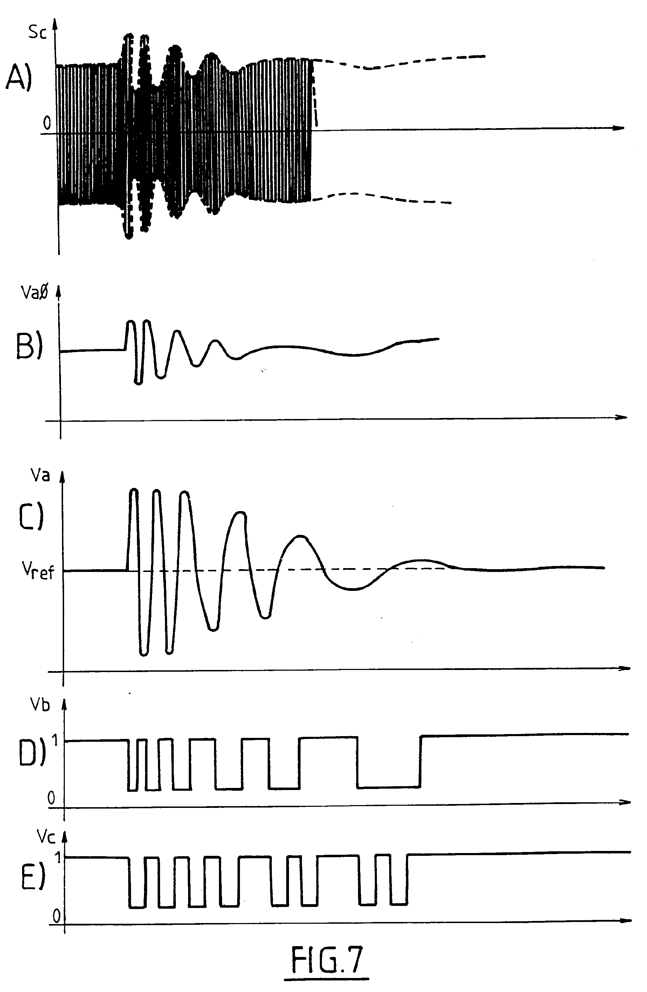

La figure 7 fait apparaître ce qui se passe lorsque le champ ultrasonore est perturbé par un ébranlement unique tel que celui produit par un choc sur la carrosserie du véhicule. La disposition des vues est là encore identique à ce qu'elle est sur les figures 5 et 6. En 7A, est représenté le signal ultrasonore capté Sc, en 7B l'enveloppe de ce signal (ce que serait Va sans la boucle d'asservissement) : la perturbation caractéristique du choc est formée par des oscillations de forte amplitude du niveau sonore, de fréquence élevée au début, dont l'amplitude et la fréquence décroissent ensemble plus ou moins vite suivant le véhicule.

En 7C figure le signal effectivement observé en Va, de même en 7D et 7E on trouve les signaux présents respectivement en Vb et Vc.

On constate qu'un ébranlement causé par un choc donne lieu à la génération d'un train d'impulsions unique composé d'un premier paquet d'impulsions assez dense suivi d'autres paquets de moindre importance de plus en plus éloignés dans le temps.

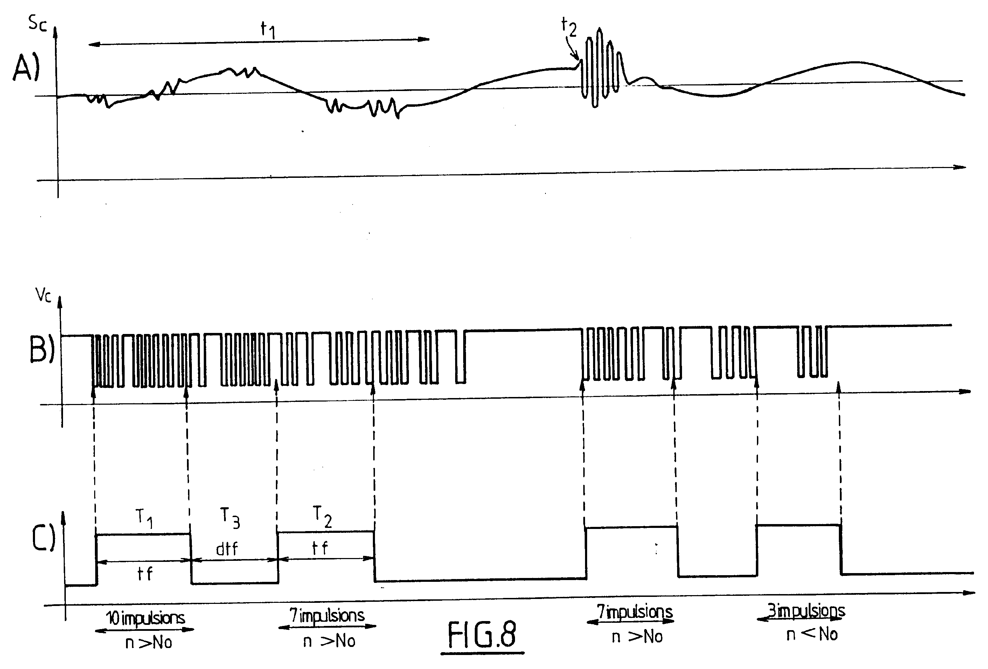

Ayant ainsi décrit le principe de fonctionnement du montage de la figure 4, on va maintenant considérer la figure 8, pour examiner ce qui se passe à plus long terme.

Sur la figure 8, on a représenté sur un même diagramme ce qui se passe en cas d'intrusion et en cas de choc sur le véhicule. En 8A est représentée l'enveloppe du signal ultrasonore perçu Sc: sur des variations lentes, non significatives se superposent durant la période tl les brèves oscillations caractéristiques d'une intrusion. En t2 est illustré l'effet d'un choc sur le véhicule.

En 8B figurent les impulsions correspondantes, telles qu'elles peuvent se déduire des figures 6 et 7.

La figure 8C illustre un autre aspect de l'invention qui consiste à faire fonctionner un dispositif compteur d'impulsions connecté au point Vc à la suite du générateur d'impulsions 27 d'une manière particulière, en relation avec les circuits décrits jusqu'à présent, de manière à rendre le système apte à distinguer une intrusion ou tentative d'intrusion dans le véhicule protégé d'un choc sur la carrosserie de ce même véhicule.

Selon l'invention, le comptage des impulsions fournies par le générateur 27 se fait pendnat deux périodes de comptage distinctes, Tl et T2 séparées par une période de "repos" T3 durant laquelle aucune impulsion n'est comptée. Le nombre d'impulsions compté durant chaque période est comparé à une valeur de référence, soit Nl pour Tl et N2 pour T2. Une détection d'intrusion ne sera considérée comme acquise que si le nombre d'impulsions compté pendant chacune des deux périodes T1 et T2 excède sa valeur de référence.

Dans tous les cas la première période de comptage Tl démarre à l'instant précis de la réception de la première impulsion, puis l'enchaînement des périodes T1, T3, T2 s'effectue de manière totalement indépendante des arrivées successives d'impulsions, et ce jusqu'à la fin de l'impulsion T2: une nouvelle période de comptage démarre alors par Tl sur la première impulsion reçue suivant la fin de T2.

Avantageusement, les seuils N1 et N2 seront identiques et, de manière à simplifier la réalisation, les durées T1 et T2 seront choisies identiques.

Sur la figure 8 on peut voir que le train d'impulsions quasi continu produit par le dispositif en cas d'intrusion provoque des comptages voisins et en tout cas supérieurs au seuil dans les deux fenêtres de comptage, tandis que le train d'impulsions en "paquets de plus en plus éloignés" produit par un choc donne des comptages très différents: même si dans la première période on peut excéder le seuil de comptage, la répartition temporelle des impulsions fait que l'on n'atteint pas ce seuil dans la seconde fenêtre.

Il est en effet possible de fixer les durées des périodes de comptage et de repos de manière à ce que l'on puisse à tout coup distinguer la suite de mouvements désordonnés caractérisant une impulsion de l'ébranlement unique résultant par exemple d'un choc.

En variante de l'invention, il est également possible de cumuler les comptages effectués dans les deux fenêtres et de les comparer à un seuil de comptage unique. Ce dispositif donne également de bons résultats: son utilisation par rapport à la variante de base pourrait s'avérer préférentielle dans certains types de véhicule suivant la manière dont les chocs de la carrosserie sont transmis au niveau des capteurs ultra-son.

D'une manière préférentielle, le dispositif de comptage peut être réalisé au moyen d'un microprocesseur (dont les ressources peuvent sans inconvénient pour l'invention être partagées avec d'autres fonctions sur le véhicule). Dans ce cas le fonctionnement est le suivant: le microprocesseur est déclenché, par exemple par interruption, à la première des impulsions du signal Vc. Il définit alors un intervalle de temps tf, pendant lequel il va compter les impulsions qui lui sont fournies par le générateur 27. Après cet intervalle de temps intervient une pause de durée dtf, puis, en principe, un second intervalle de temps de comptage, dont la durée tf est avantageusement la même que précédemment.

Bien entendu, l'allure des signaux donnés sur la figure 8 est purement illustrative, les échelles des temps ne pouvant être respectées sur les dessins.

A titre d'exemple, on pourra considérer les valeurs suivantes:
- constante de temps de l'amplificateur 241: 0,5 seconde
- gain de l'amplificateur 241: 1000 (en boucle ouverte)
- durée des impulsions du générateur 27: 5 millisecondes
- intervalle entre impulsions du générateur 27: 4 millisecondes
- durée tf de comptage: 300 millisecondes
- intervalle entre périodes tf: 200 millisecondes.

Des essais ont été faits sur un véhicule avec un dispositif selon l'invention. Ils ont montré une insensibilité totale du dispositif à l'aménagement intérieur du véhicule, ainsi qu'aux variations de température diurne/nocturne, et à l'ébranlement du véhicule par un choc unique.

Il est alors possible de fixer pour chaque type de véhicule une seule tension de référence pour la polarisation de l'amplificateur 241, et l'on satisfait ainsi l'objectif d'un montage extrêmement simple, installable une fois pour toutes à bord d'un véhicule de type donné, sans aucun réglage préalable à son fonctionnement, et présentant une faible consommation.

## Revendications

1. Dispositif antivol à ultrasons pour véhicule, du type comportant:
- un transducteur-émetteur d'ultrasons (10);
- un circuit (11) d'excitation sensiblement continue du transducteur-émetteur, pour produire des ondes ultrasonores à l'intérieur du véhicule, ces ondes définissant une configuration de champ acoustique sensiblement stationnaire en l'absence de mouvement dans le véhicule;
- un transducteur-récepteur d'ultrasons (20);
- un circuit de réception (21) relié au transducteur-récepteur pour fournir un signal capté, représentatif du champ acoustique perçu par le transducteur-récepteur;
- un étage (22) amplificateur du signal capté, à gain variable, par une résistance (226) en parallèle sur la maille de courant d'un transistor auxiliaire (252), suivi d'un étage redresseur (23);
- une boucle (24,25) d'asservissement du gain de l'étage amplificateur (22) en fonction de la sortie de l'étage redresseur (23);
- des moyens de traitement (AL) pour établir une alarme en fonction des variations du signal capté, relié à la sortie de l'étage redresseur (23), et comprenant un détecteur de variations (26), déclenchant un montage générateur d'impulsions calibrées (27), le déclenchement de l'alarme se faisant lorsqu'un comptage de ces impulsions atteint un nombre prédéterminé;
dispositif caractérisé en ce que la boucle d'asservissement comporte un amplificateur différentiel (241), dont une entrée reçoit la sortie de l'étage redresseur (23), l'autre une tension de référence, tandis que sa sortie commande la conduction du transistor auxiliaire (252).

2. Dispositif selon la revendication 1, caractérisé en ce que l'étage amplificateur (22) possède un grand gain et une constante de temps élevée, choisis de telle sorte que la boucle d'asservissement est de caractéristiques hypercritiques.

3. Dispositif selon la revendication 1 à 2, caractérisé en ce que le détecteur de variations (26) est un détecteur unidirectionnel de haute sensibilité.

4. Dispositif selon la revendication 3, caractérisé en ce que le détecteur de variations (26) opère en comparant son signal incident à une réplique retardée et légèrement affaiblie de celui-ci.

5. Dispositif selon l'une des revendications 1 à 4, caractérisé en ce que le générateur d'impulsion (27) est constitué à l'aide d'amplificateurs inverseurs, de diodes et de circuits résistance-capacité.

6. Dispositif selon l'une des revendications 1 à 5, caractérisé en ce que le comptage d'impulsions commence à la première d'entre elles, et s'effectue pendant au moins un temps prédéterminé.

7. Dispositif selon la revendication 6, caractérisé en ce que le comptage d'impulsions s'effectue pendant deux créneaux temporels espacés d'un intervalle, les durées de ces créneaux et de cet intervalle étant choisies en fonction des caractéristiques du véhicule, compte tenu de la réponse hypercritique de la boucle d'asservissement.

8. Dispositif selon la revendication 7, caractérisé en ce que les deux créneaux temporels sont de même durée.

9. Dispositif selon l'une des revendications 1 à 8, caractérisé en ce que le comptage d'impulsions est réalisé par microprocesseur (MP).

## Patentansprüche

1. Ultraschall-Diebstahlschutzvorrichtung für Kraftfahrzeuge, bestehend aus:
- einem Ultraschall-Sender-Wandler (10);
- einem Erregerschaltkreis (11) für die nahezu kontinuierliche Anregung des Sender-Wandlers, um Ultraschallwellen im Innenraum des Fahrzeugs zu erzeugen, wobei diese Ultraschallwellen bei Nichtvorhandensein von Bewegungen im Fahrzeug eine in etwa stationäre Schallfeldkonfiguration definieren;
- einem Ultraschall-Empfänger-Wandler (20);
- einem Empfangsschaltkreis (21), der an den Empfänger-Wandler angeschlossen ist, um ein aufgenommenes Signal zu liefern, das repräsentativ für das durch den Empfänger-Wandler erfaßte Schallfeld ist;
- einer Verstärkerstufe (22) für das aufgenommene Signal mit veränderlichem Verstärkungsfaktor über einen Widerstand (226) in Parallelschaltung zum Stromglied eines Hilfstransistors (252), gefolgt von einer Gleichrichterstufe (23);
- einem Regelkreis (24, 25) für die Regelung des Verstärkungsfaktors der Verstärkerstufe (22) in Abhängigkeit vom Ausgang der Gleichrichterstufe (23);
- Verarbeitungsmitteln (AL) für die Erzeugung eines Alarms in Abhängigkeit von den Änderungen des aufgenommenen Signals, die an den Ausgang der Gleichrichterstufe (23) angeschlossen sind und einen Änderungsdetektor (26) umfassen, der eine Schaltung für die Generierung von kalibrierten Impulsen (27) ansteuert, wobei die Alarmauslösung erfolgt, wenn bei einer Zählung dieser Impulse eine vorgegebene Anzahl erreicht wird,
**dadurch gekennzeichnet**, daß der Regelkreis einen Differentialverstärker (241) umfaßt, der über einen Eingang mit dem Ausgang der Gleichrichterstufe (23) verbunden ist und über seinen anderen Eingang eine Referenzspannung empfängt, während sein Ausgang die Leitung des Hilfstransistors (252) steuert.

2. Vorrichtung nach Anspruch 1, **dadurch gekennzeichnet**, daß die Verstärkerstufe (22) einen großen Verstärkungsfaktor und eine hohe Zeitkonstante besitzt, so daß der Regelkreis überkritische Kenndaten aufweist.

3. Vorrichtung nach Anspruch 1 bis 2 , **dadurch** **gekennzeichnet**, daß es sich bei dem Änderungsdetektor (26) um einen hochempfindlichen Einrichtungs-Detektor handelt.

4. Vorrichtung nach Anspruch 3, **dadurch** **gekennzeichnet**, daß die Funktionsweise des Änderungsdetektors (26) auf einem Vergleich seines Eingangssignals mit einer verzögerten und leicht abgeschwächten Antwort auf dieses Signal beruht.

5. Vorrichtung nach einem der Ansprüche 1 bis 4, **dadurch gekennzeichnet**, daß der Impulsgenerator (27) anhand von Umkehrverstärkern, Dioden und RC-Gliedern ausgeführt ist.

6. Vorrichtung nach einem der Ansprüche 1 bis 5, **dadurch gekennzeichnet**, daß die Impulszählung bei dem jeweils ersten Impuls beginnt und mindestens während einer vorgegebenen Zeit erfolgt.

7. Vorrichtung nach Anspruch 6, **dadurch** **gekennzeichnet**, daß die Impulszählung während zweier durch ein Intervall voneinander getrennter Zeitabschnitte erfolgt, wobei die Dauer dieser Zeitabschnitte und dieses Intervalls jeweils nach Maßgabe der Eigenschaften des Fahrzeugs und unter Berücksichtigung des überkritischen Verhaltens des Regelkreises ausgewählt wird.

8. Vorrichtung nach Anspruch 7, **dadurch** **gekennzeichnet**, daß die beiden Zeitabschnitte die gleiche Dauer haben.

9. Vorrichtung nach einem der Ansprüche 1 bis 8, **dadurch gekennzeichnet**, daß die Impulszählung durch einen Mikroprozessor (MP) ausgeführt wird.

## Claims

1. An ultrasonic anti-theft device of a vehicle, of the type comprising:
- an ultrasonic transducer-emitter (10);
- an essentially continuous excitation circuit (11) of the transducer-emitter, in order to produce ultrasonic waves inside the vehicle, these waves defining an essentially stationary acoustic field in the absence of movement in the vehicle;
- an ultrasonic transducer-receiver (20);
- a receiving circuit (21) connected to the transducer-receiver in order to provide a detected signal, representative of the acoustic field discerned by the transducer-receiver;
- an amplifier stage (22) for the detected signal, having a gain which can be varied by a resistor (226) in parallel on the current link of an auxiliary transistor (252), followed by a rectifier stage (23);
- a control loop (24, 25) of the gain of the amplifier stage (22) as a function of the output of the rectifier stage (23);
- processing means (AL) for generating an alarm as a function of variations of the detected signal, connected to the output of the rectifier stage (23), and comprising a variation detector (26), triggering a calibrated pulse generator installation (27), the alarm being triggered when the counted number of these pulses reaches a predetermined number;
**characterised in that** the control loop comprises a differential amplifier (241), one input of which receives the output of the rectifier stage (23), the other a reference voltage, whereas its output controls the conduction of the auxiliary transistor (252).

2. A device according to Claim 1,
**characterised in that** the amplifier stage (22) has a large gain and a high time constant, chosen so that the control loop has supercritical characteristics.

3. A device according to Claim 1 to 2,
**characterised in that** the variation detector (26) is a unidirectional detector of high sensitivity.

4. A device according to Claim 3,
**characterised in that** the variation detector (26) operates by comparing its incident signal with a delayed and slightly attenuated response thereof.

5. A device according to one of Claims 1 to 4,
**characterised in that** the pulse generator (27) is formed by means of inverting amplifiers, diodes and resistor-capacitor circuits.

6. A device according to one of Claims 1 to 5,
**characterised in that** the pulse counting operation begins with the first pulse, and is performed for at least a predetermined time.

7. A device according to Claim 6,
**characterised in that** the pulse counting operation is performed during two time slots separated by an interval, the duration of these time slots and of this interval being chosen in dependence on the characteristics of the vehicle, taking into consideration the supercritical response of the control loop.

8. A device according to Claim 7,
**characterised in that** the two time slots are of the same duration.

9. A device according to one of Claims 1 to 8,
**characterised in that** the pulse counting operation is performed by microprocessor (MP).
